Europäisches Patentamt

(19) European Patent Office

Office européen des brevets

(11) Numéro de publication: **0 211 755**
**B1**

(12) **FASCICULE DE BREVET EUROPÉEN**

(45) Date de publication du fascicule du brevet: 08.03.89

(51) Int. Cl.⁴: **C 03 B 23/03**, C 03 B 23/035

(21) Numéro de dépôt: 86401697.7

(22) Date de dépôt: 30.07.86

(54) Forme de bombage avec parties latérales roulant sur la feuille de verre.

(30) Priorité: 01.08.85 DE 3527558

(43) Date de publication de la demande:
25.02.87 Bulletin 87/9

(45) Mention de la délivrance du brevet:
08.03.89 Bulletin 89/10

(84) Etats contractants désignés:
BE DE FR GB IT SE

(56) Documents cité:
EP-A-0 139 524
FR-A-2 403 307
US-A-2 182 448
US-A-3 077 753
US-A-4 297 118
US-A-4 430 110

(73) Titulaire: SAINT-GOBAIN VITRAGE, Les Miroirs
18, avenue d'Alsace, F-92400 Courbevoie (FR)
(84) Etats contractants désignés: BE FR GB IT SE

(73) Titulaire: VEGLA VEREINIGTE GLASWERKE,
Viktoriaallee 3-5, D-5100 Aachen (DE)
(84) Etats contractants désignés: DE

(72) Inventeur: Bartusel, Karl-Rudolf, An der
Waldmeisterhütte 9, D-5190 Stolberg (DE)
Inventeur: Kriesenger, Alf, Auf der Kloss 27,
D-5190 Stolberg (DE)
Inventeur: Gatzweiler, Werner, Rheinerstrasse 7,
D-5138 Heinsberg (DE)

(74) Mandataire: Leconte, Jean-Gérard, Saint-Gobain
Recherche 39, Quai Lucien Lefranc, F-93304
Aubervilliers Cedex (FR)

## Description

L'invention a trait à un procédé de bombage de feuilles de verre par exemple de vitrages automobiles, au moyen d'une forme de bombage en plusieurs éléments articulés les uns aux autres; la feuille de verre échauffée à la température de bombage étant saisie puis cintrée suivant la forme souhaitée par rotation autour de son axe d'articulation d'au moins un des éléments de la forme de bombage.

Un procédé usuel de bombage de feuilles de verre connu par exemple du brevet FR-A-1 168 605 est le pressage, en position verticale, des feuilles échauffées à leur température de bombage au moyen d'une presse formée de deux outils de bombage. L'outil de formage mâle est généralement une forme rigide pleine et l'outil de formage femelle est un cadre formé de plusieurs éléments articulés. Pour le bombage d'une feuille on déploie les éléments latéraux articulés de l'outil femelle dont la forme correspond au galbe souhaité pour la feuille qui est alors saisie par l'élément central puis pressée contre la forme mâle de bombage; enfin les éléments latéraux sont repliés et les bords de la feuille s'appuient alors également contre la forme mâle pleine. Le long des articulations, la feuille de verre subit des efforts importants qui entraînent parfois des mouvements relatifs entre la feuille et la surface de la forme de bombage. De telles presses sont plus particulièrement utilisées pour des pliages en U aux angles très marqués par exemple pour des pare-brises ou des lunettes arrières d'automobiles.

Un autre procédé usuel de bombage décrit par le brevet FR-A-1 474 251 consiste à cintrer les feuilles de verre en position horizontale, non seulement avec des outils de pressage mais aussi comme suivant le procédé dit de "bombage sur squelette", par affaissement de la feuille chauffée, sous l'effet de son propre poids, sur un cadre de bombage. En cas de fortes courbures, les cadres de bombage utilisés sont constitués de plusieurs éléments liés par des articulations et qui, pendant l'opération de bombage, passent par rotation autour de leurs articulations de position ouverte en position fermée.

De plus, il est connu des procédés de bombage en position horizontale selon lesquels la feuille de verre est saisie par une plaque aspirante mobile verticalement et globalement flexible et l'ensemble, plaque et feuille, est bombé à la forme souhaité. De tels procédés sont décrits par exemple dans les publications de brevet DE-A-3 109 149, FR-A-2 546 505, FR-A-2 546 506 et FR-A-2 546 507.

Dans tous ces procédés de bombage, on ne peut éviter un mouvement plus ou moins fort de glissement relatif entre la surface de formage agissant sur la surface de la feuille de la forme articulée et cette dernière. Ce mouvement relatif entre la surface de formage et la feuille a en règle générale une influence néfaste sur la surface de verre qui se traduit par un faible affaissement sur les bords, comparé à l'état définitif souhaité, des dilatations ou des écrasements de la feuille dans les zones de fortes courbures, et/ou des défauts optiques du verre.

Selon l'invention, l'élément articulé est laminé progressivement sur la feuille de verre alors que ses axes d'articulation sont positionnés le long d'un rail courbe déterminé en fonction de la forme souhaitée pour la feuille, de sorte que la feuille est passée progressivement contre la forme de bombage sans mouvement relatif de glissement.

Suivant un premier mode de réalisation, l'invention s'applique aux procédés de bombage par pressage selon lesquels les feuilles de verre sont amenées en position verticale entre la partie mâle pleine, d'une seule pièce, d'une presse de bombage et la partie femelle présentant plusieurs éléments articulés entre eux. La feuille de verre est alors appliquée progressivement contre la forme mâle pleine par les éléments articulés roulant sur la feuille.

Dans ce cas, pour la mise en oeuvre du procédé selon l'invention, on prévoit une presse de bombage avec une forme mâle pleine en un élément et une matrice en plusieurs éléments articulés rigides, mobiles en rotation et constituant un cadre servant de surface de bombage, la matrice se caractérisant par le fait que les axes d'articulation des éléments articulés sont guidés le long d'une courbe déterminée en fonction de la géométrie de la forme souhaitée du vitrage. On utilise généralement des formes femelles en trois éléments, un élément central présentant une courbure relativement faible et deux éléments latéraux articulés à lui pour le bombage des bords fortement courbés de la feuille de verre. Selon l'invention, la forme de ces éléments latéraux ne correspond par exactement à la forme voulue pour la feuille, ce qui est déjà le cas pour les procédés connus, mais présente une plus faible courbure ce qui leur permet de rouler sur le verre avec un contact avec le verre seulement le long d'une ligne pendant toute l'opération de bombage. Pour l'obtention de zones de vitrages à courbure cylindrique, les éléments latéraux peuvent présenter par exemple une surface plane ou même une surface à courbure inverse de celle désirée pour le verre.

Suivant un autre mode de réalisation, l'invention s'applique au procédé de bombage des feuilles de verre au moyen d'une forme aspirante plane saisissant la feuille qui est alors cintrée par le recourbement des éléments latéraux de la forme aspirante. Dans ce cas, le procédé selon l'invention est conduit d'une manière telle que la feuille de verre, de préférence en position horizontale, soit saisie par une plaque aspirante disposée au dessus de la feuille et comportant une série de petites plaques aspirantes liées entre elles par des articulations et soit cintrée, avec maintien du contact par aspiration, par rotation des éléments aspirants articulés, alors que leurs axes d'articulations sont positionnés. Le dispositif de formage comporte une plaque aspirante déformable soulevant la feuille de verre chauffée amenée en position horizontale par un convoyeur, la plaque aspirante étant déformée après avoir saisi la feuille de verre qui est ainsi cintrée à la forme souhaitée. La plaque aspirante est composée d'une plaque aspirante centrale rigide, ayant une surface de contact essentiellement plane et d'au moins une plaque aspirante latérale en soit rigide, articulée, ayant une surface de contact essentiellement bombée. Selon l'invention les axes d'articulation des plaques latérales sont guidées le long d'une courbe déterminée en fonction de la géométrie de la forme souhaitée du vitrage.

Le positionnement des axes d'articulation le long d'un rail courbe, nécessaire à la mise en oeuvre de l'invention, peut être réalisé de différentes façons. Il est par exemple possible de loger les axes d'articulation des éléments latéraux dans des plaques de coulisse percées de fentes de guidage décrivant la course des rails courbes, les plaques de coulisse étant de préférence montées sur la partie fixe de la forme de bombage. Un mécanisme à manivelle peut être substitué à un tel guide de coulisse. Un tel mécanisme à manivelle présente exclusivement des paliers de glissements rigides ou à guidage forcé, ce qui d'un certain point de vue est plus avantageux qu'un guide de coulisse.

D'autres avantages et particularités de l'invention sont détaillés en référence aux dessins qui montrent:

figure 1: une représentation schématique du procédé selon l'invention pour le bombage d'une feuille de verre selon une fortement convexe,

figure 2: un exemple de réalisation d'un dispositif selon l'invention de bombage de feuilles de verre en position verticale, vu de l'arrière de la forme femelle,

figure 3: une vue de face de la forme femelle représentée à la figure 2,

figure 4: une vue partielle du dispositif représenté aux figures 2 et 3 au cours de l'opération de bombage,

figure 5: un exemple de réalisation d'un dispositif selon l'invention de bombage d'une feuille de verre en position horizontale avec une plaque aspirante en plusieurs éléments, vu au début de l'opération de bombage,

figure 6: le dispositif de la figure 5 vu au terme de l'opération de bombage.

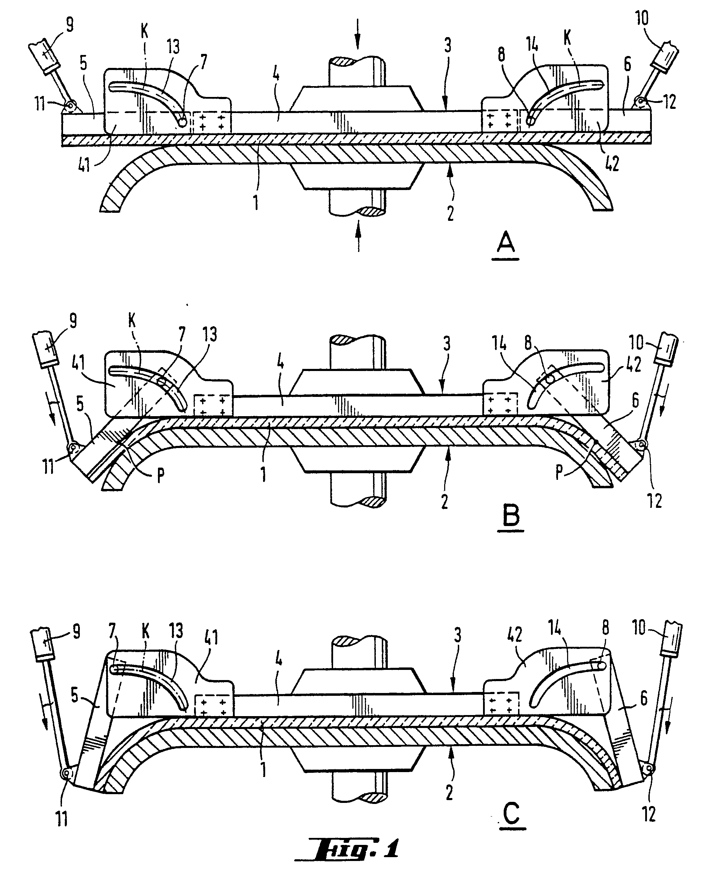

La presse de bombage conforme à l'invention comprend, comme il ressort de la figure 1, une partie mâle pleine 2 dont la surface est d'un seul tenant et une partie femelle ou matrice 3 en plusieurs éléments. La matrice 3 est formée d'un cadre de bombage afin de la feuille de verre 1 ne touche la machine que le long des bords. La matrice 3 comporte un élément central rigide 4 et deux éléments latéraux 5 et 6 qui sont attachés à l'élément central 4 par une charnière. Pour le bombage de la feuille de verre 1, les éléments latéraux 5, 6 sont passés en position arrière, c'est-à-dire ouverte; les deux formes de bombage sont pressées contre la feuille 1, l'élément central 4 presse la partie centrale de la feuille 1 contre la partie centrale de la forme de bombage 2 puis les deux éléments latéraux 5, 6 tournent autour de leurs axes d'articulation.

Dans le cas représenté à la figure 1 où la feuille 1 présente à ses extrémités une courbure cylindrique, les deux éléments latéraux 5, 6 ont des surfaces planes. Quand la matrice 3 vient au contact de la feuille plane 1, avant que ne débute le processus de bombage proprement dit, les éléments latéraux 5, 6 reposent déjà sur toute une surface de contact sur la feuille de verre 1. Cet état est représenté à la figure 1 - A.

Pour le bombage des extrémités latérales de la feuille 1, les éléments latéraux 5, 6 tournent autour des axes d'articulation 7, 8 à l'aide des vérins hydrauliques 9, 10 dont les tiges de piston agissent sur des supports 11, 12 disposés sur les extrémités extérieures des éléments 5, 6. Pendant cette rotation, les axes d'articulation 7 et 8 se déplacent le long des courbes K. Les courbes K dépendent de la courbure souhaitée pour la feuille de verre 1 et par ailleurs de la forme que présentent les surfaces des éléments latéraux 5, 6. La courbe K se calcule facilement en fonction des conditions géométriques données. Le déplacement des axes d'articulation 7, 8 suivant les courbes K évite que ne se produise pendant l'opération de bombage un mouvement relatif de glissement entre les faces des éléments latéraux et la surface du verre. Pour assurer leur guidage sur le rail courbe K, ces axes d'articulation 7 respectivement 8 sont montés de coulisses et se déplacent par glissement dans des fentes 13 respectivement 14 correspondant à la courbe K.

Comme il ressort plus particulièrement des figures 1B et 1C représentant le dispositif au cours et à la fin du processus de bombage, il s'accomplit avec la rotation des éléments latéraux 5, 6 un roulement des éléments latéraux 5, 6 sur la forme pleine convexe. Pendant cette opération de roulement, les régions des bords de la feuille 1 s'appuient de façon continue sur la forme 2 jusqu'au point P où la feuille de verre 1 est comprimée sur la forme mâle 2 et sont à nouveau libres après ce point. Le déplacement des axes d'articulation 7, 8 dans les guides courbes 13, 14 se produit directement sous effet de la pression exercée par les pistons 9, 10 qui commandent la rotation des éléments latéraux 5, 6. Dans leur position finale, comme on peut le voir à la figure C, les éléments latéraux ne touchent la feuille 1 que par leurs extrémités alors que simultanément les axes d'articulation 7, 8 ont atteint l'extrémité respective des guides courbes 13, 14. Les vérins hydrauliques 9, 10, il s'agit de pistons à double effet, replacent alors simplement les éléments latéraux 5, 6 en position de sortie et la feuille de verre 1 bombée peut être simplement retirée de la presse après que les formes de bombage 2, 3 aient été de même réouvertes. Elle peut alors être lentement refroidie ou au contraire trempée par un refroidissement brutal.

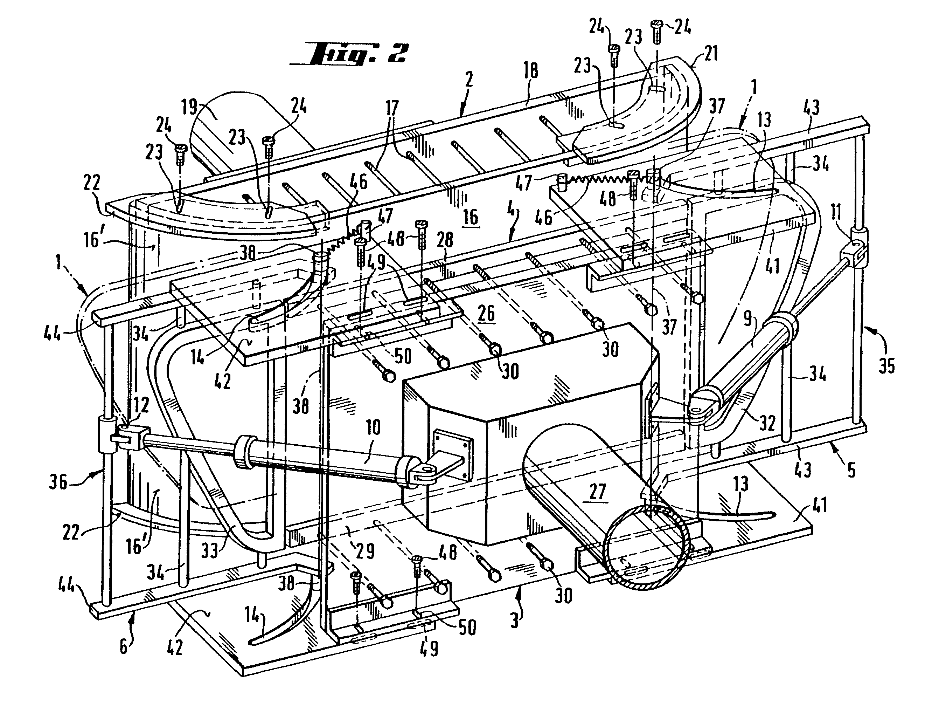

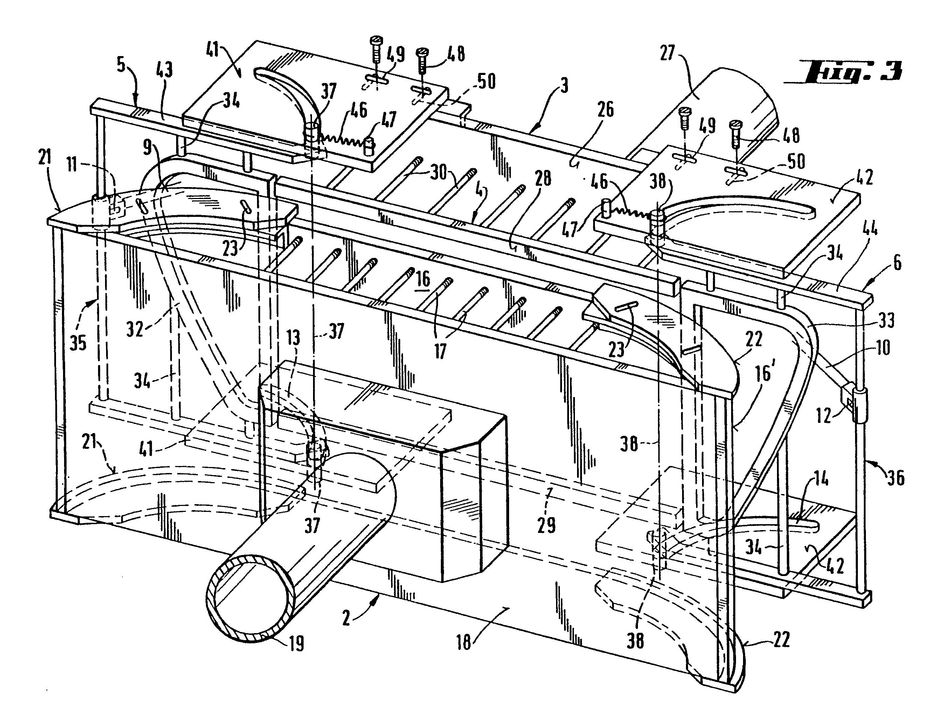

Aux figures 2 à 4 est représentée sous différentes vues en perspective une forme de réalisation d'une presse de bombage comportant des formes mâle et femelle et qui travaillent suivant le principe schématisé à la figure 1.

La forme mâle 2 présente une structure usuelle avec une plaque pleine 16 fixée à une plaque support 18 par une série de boulons filetés 17 qui permettent de corriger si nécessaire la forme de la plaque 16. La plaque support 18 peut être déplacée entre les deux positions extrêmes de la presse au moyen d'un élément de guidage approprié, par exemple des tiges de piston 19 d'un mécanisme à vérin pneumatique ou hydraulique. Aux deux extrémités latérales de la forme mâle 2, des barres conductrices 21, 22 sont disposées au-dessus et sous la surface 16'. La fixation de ces barres 21, 22 sur la forme mâle est obtenue par des trous longitudinaux 23 et des vis 24 de manière à ce que l'on puisse modifier la position des barres 21, 22 qui avancent de quelques millimètres sur le bord adjacent de la matrice 3 au-dessus de la surface 16'. La fonction de ces barres conductrices 21, 22 est détaillée plus après.

La matrice 3 comprend une plaque-support 26 disposée sur les guides de pressage qui est déplacée aux deux extrémités de la presse par les tiges de piston 27. Sur la plaque-support 26, l'élément central rigide 4 formé des deux rails 28, 29 est fixé par des boulons filetés réglables 30. Les éléments latéraux articulés 5, 6 sont formés chacun d'un cadre de bombage 32 respectivement 33 fixé sur un cadre extérieur 35 respectivement 36 par des barres 34. Les cadres de bombage 32, 33 correspondent au contour de la feuille de verre à conformer. Dans le cas représenté où la feuille de verre doit acquérir sur chacune de ses extrémités latérales un bombage cylindrique, les surfaces de contact des cadres de bombage sont respectivement planes. Les cadres extérieurs 35 et 36 sont disposés de façon articulée sur la plaque-support 26, sont munis sur leurs extrémités attenantes à l'élément central d'axes d'articulation 37, 38 et mûs en rotation par les vérins 9, 10 extérieurs, agissant sur les cadres 35, 36.

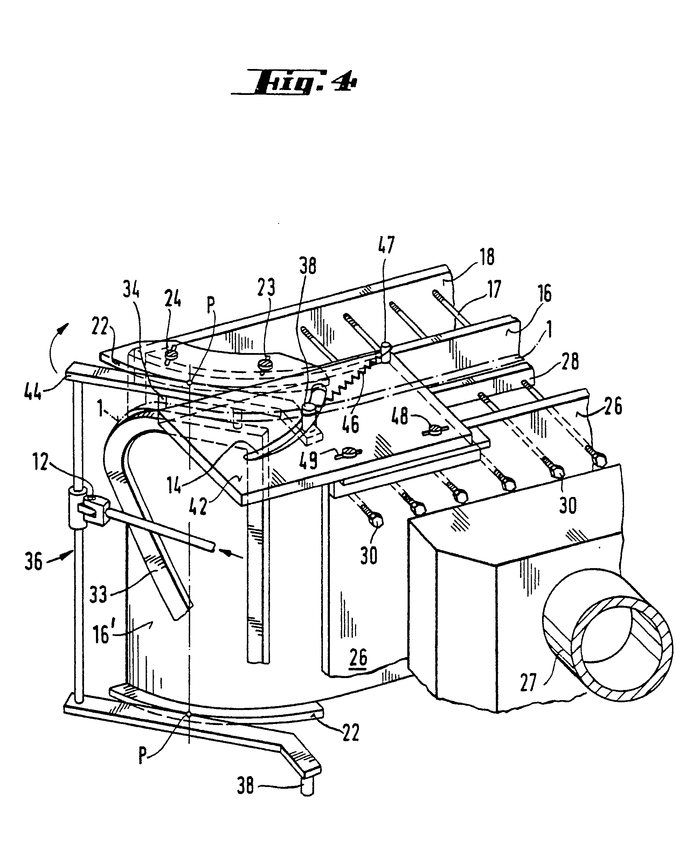

Les axes d'articulation 37, 38 sont guidés le long de la courbe souhaitée par des guides 13, 14 disposés dans des plaques coulissantes 41, 42, ainsi les tiges de piston 9, 10 amorcent le mouvement de rotation et les éléments latéraux articulés roulent sur la feuille de verre qui respectivement roule sur la forme mâle. Afin de ne fournir à la feuille de verre que la pression nécessaire à son bombage, les barres conductrices 21, 22 sont montées de manière à ce qu'au cours de la rotation de l'élément latéral 5, 6, le bord horizontal 43, 44 du cadre de bombage 35, 36 vienne toucher les barres conductrices 21, 22 et roule sur elles. Dans ce but, le montage des barres conductrices 21, 22 sur la forme mâle 2 est entrepris, comme il ressort de la figure 4, de manière à ce que subsiste un espace qui correspond exactement à l'épaisseur de la feuille de verre à conformer sur le segment P - P déterminé par les deux points de contact P, entre la ligne de contact du cadre 33 et la surface 16'. De cette manière, on est sûr de ne pas transmettre au verre une force de pressage trop élevée.

Afin que les bords des cadres 43, 44 s'appuient au cours du roulement de manière certaine sur les barres conductrices 21, 22 et que de plus les axes d'articulation 37, 38 retournent en position de départ à la fin du roulement les axes d'articulation 37, 38 sont rappelés de l'autre côté, par des ressorts 46 fixés également aux tourillons 47. D'autres moyens équivalents peuvent être prévus à la place de ces ressorts 46, comme par exemple des vérins pneumatiques.

En ce qui concerne les rails courbes formés par les fentes 13, 14 prévues pour le déplacement des axes d'articulation 37, 38 pendant l'opération de bombage, il s'agit de développantes établies en fonction de la courbure souhaitée pour la feuille de verre, c'est-à-dire dans le cas ici représenté de la courbure des barres conductrices 21, 22. Ces courbes se calculent directement mathématiquement. Les plaques de coulisse 41, 42 présentent les fentes 13, 14 sont fixées sur la plaque-support 26 d'une manière réglable, par exemple à l'aide de vis qui traversent les trous longitudinaux 49 dans les plaques de coulisse 41, 42 et les trous transversaux 50 dans l'attache correspondante de la plaque-support 26. De cette manière, certaines corrections de la position des plaques de coulisse 41, 42 sont possibles.

D'autres moyens équivalents de guidage des axes d'articulation peuvent être utilisés pour la presse de bombage décrite ci-dessus et représentée aux figures 1 à 4. Au lieu des guides de coulisse, on peut avoir par exemple un mécanisme de manivelle analogue à celui du dispositif de bombage décrit ci-après.

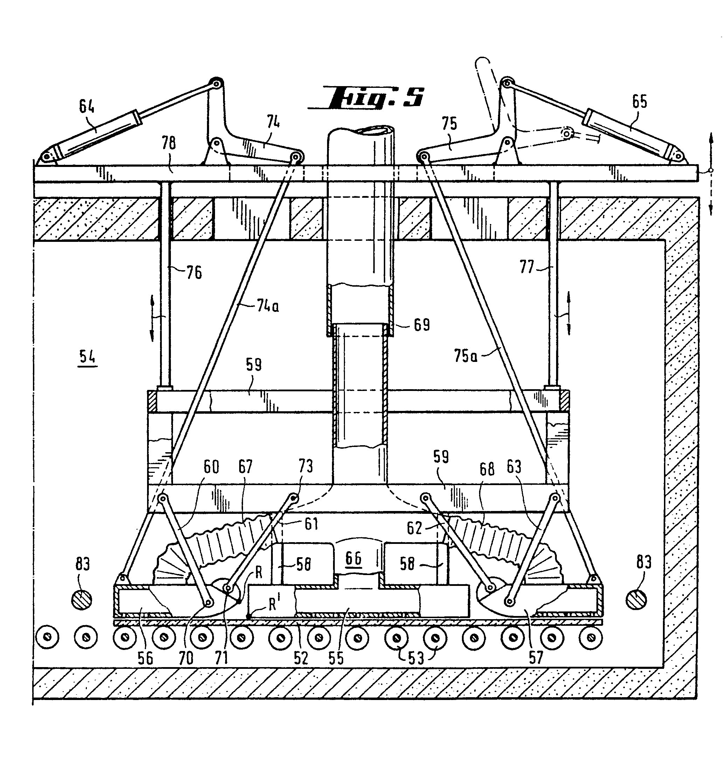

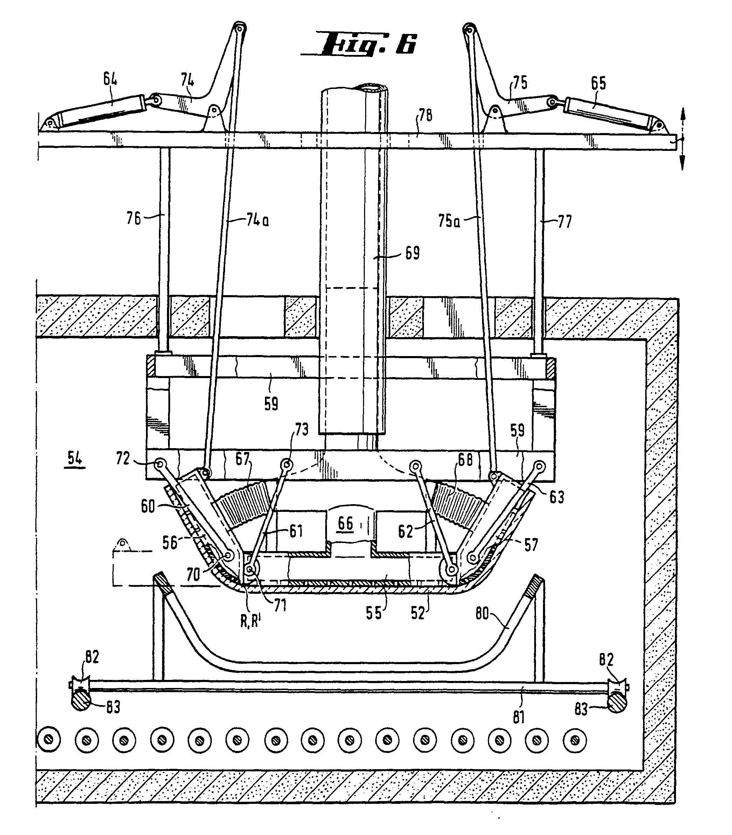

Avec le dispositif de bombage représenté aux figures 5 et 6, la feuille de verre n'est pas pressée contre une forme mâle par une matrice en plusieurs éléments mais est maintenue par aspiration contre une forme de bombage en plusieurs éléments dont les parties mobiles sont repliées après la saisie de la feuille de verre, ce qui permet de cintrer celle-ci à la forme souhaitée.

Dans ce cas, la feuille de verre 52 est transportée sur un convoyeur à rouleaux 53 au travers d'un four horizontal 54 dans lequel elle s'échauffe à la température de bombage. Quand la feuille 52 a atteint la température de bombage, elle est saisie par un dispositif aspirant en plusieurs éléments, pouvant être monté et abaissé et qui forme également la forme de bombage. Ce dispositif aspirant comprend une plaque aspirante centrale 55 et deux plaques latérales 56 et 57. Par des barres 58, la plaque centrale est fixée rigidement à un cadre 59. Les plaques aspirantes 56, 57 sont montées de manière articulée sur le cadre 59 au moyen de deux manivelles 60, 61 (respectivement 62, 63). Le mouvement de rotation est engendré par les pistons 64 et 65 qui actionnent par le levier 74, respectivement 75, les barres 74a, respectivement 75a, qui elles-mêmes sont articulées aux plaques aspirantes latérales 56, respectivement 57. Les pistons 64 et 65 sont disposés à l'extérieur de l'enceinte du four, et sont plus précisément fixés à un cadre 78 qui est relié au cadre 59 se trouvant dans l'enceinte du four par les barres 76 et 77. Par un dispositif de commande, ici non représenté, le cadre 78 et toute la structure qui lui est attachée peuvent être déplacés verticalement en position haute ou en position basse.

Dans la position de repos de la plaque aspirante représentée à la figure 5, les portions planes des plaques aspirantes latérales 56, 57 sont dans le même plan que le plan de contact de la plaque aspirante centrale 55, de sorte que la feuille de verre 52 se trouve saisie simultanément par la plaque centrale 55 et les deux plaques latérales 56, 57, dès que la dépression est établie.

Le vide est réalisé par le canal 66 pour la plaque centrale 55 et pour les plaques latérales 56 et 57 par les conduites flexibles 67, 68 qui toutes débouchent dans le canal télescopique 69 conduisant à une pompe à vide appropriée.

Pour le bombage de la feuille de verre 52, on ferme les deux plaques latérales 56, 57, représentées à la figure 6 en position déployée, l'axe d'articulation se déplaçant sur une courbe qui est donnée par les deux manivelles 60, 61 respectivement 62, 63 et par l'emplacement de leurs points 70, 71 d'articulation à la plaque articulée 56 respectivement 57 et 72, 73 d'articulation au cadre-support 59. L'emplacement des points d'articulation et la longueur des manivelles 60, 61 se calculent en fonction de la courbure de la partie bombée des plaques aspirantes latérales, en respectant comme condition que la surface bombée des plaques latérales articulées 56, 57 roule sur la feuille de verre de telle manière qu'à la fin du roulement, le point R de la plaque latérale 56 soit confondu avec le point R' de la plaque centrale 55 et que de plus, aucun mouvement relatif de glissement ne se produise entre la surface du verre et la surface de contact des plaques 56, 57.

Dans ce but, la construction du dispositif est conduite de manière à permettre une modification et de la longueur des manivelles 60, 61 et de l'emplacement des points d'articulation 70, 71, 72 et 73. De cette façon, on peut entreprendre une correction de la courbe décrite par les axes d'articulation, comme d'ailleurs modifier cette courbe pour l'obtention de différentes courbures, par exemple lorsque les plaques latérales 56, 57 sont remplacées par d'autres présentant une coubure différente.

Après que la feuille de verre ait été saisie par la forme aspirante puis en position haute cintrée à la forme souhaitée par la rotation des plaque latérales 56, 57, le cadre 59 avec la totalité de la forme aspirante est soulevé à l'aide des barres 76, 77, alors que la dépression est maintenue. Cette position supérieure est représentée à la figure 6. On amène alors sous la feuille 52 un chariot 81, portant un cadre 80 dont la forme correspond à la feuille de verre bombée, qui muni de rouleaux 82 avançant sur des rails 83 disposés perpendiculairement à l'axe longitudinal du four 54. La feuille de verre 57 est déposée sur la cadre 80 et conduite grâce au chariot 81 jusqu'au poste de refroidissement où elle subit par exemple une trempe thermique par soufflage d'air froid.

Pour la dépose de la feuille 52 sur la cadre 80, on peut opérer de telle façon qu'à l'aide du mécanisme de levage représenté, la feuille de verre soit descendue jusqu'au cadre et que la dépression ne soit supprimée qu'au moment, ou juste avant que la feuille atteigne le cadre. Dans ce cas, il est présumé que la feuille de verre 52 a atteint sa forme définitive grâce à la forme aspirante 55, 56 et 57.

Ce procédé peut également être conduit en laissant tomber d'une hauteur plus ou moins haute la feuille 52 sur le cadre 80 après avoir interrompu l'aspiration. Par son énergie dynamique, la feuille se cintre au contact du cadre 80 et prend alors sur son contour la forme prévue par le cadre 80. Une telle mise en oeuvre conduit à un bombage en deux étapes, un préformage de la feuille de verre par la forme aspirante en plusieurs éléments et une finition du formage sur le cadre 80.

## Revendications

1. Procédé de bombage d'une feuille de verre (1; 52), par exemple d'un vitrage automobile au moyen d'une forme de bombage (3) en plusieurs éléments articulés (4, 5, 6; 55, 56, 57) les uns aux autres, dans lequel la feuille (1; 52) chauffée à sa température de bombage est saisie par la forme de bombage (3), et par la rotation autour de son axe d'articulation (7, 8; 37, 38) d'au moins un des éléments articulés (5, 6; 56, 57), est cintrée à la forme souhaitée, caractérisé en ce que l'élément articulé (5, 6; 56, 57) est roulé progressivement sur la feuille de verre (1; 52), l'axe d'articulation (7, 8; 37, 38) étant positionné le long d'une courbe déterminée en fonction de la forme souhaitée pour la feuille de verre (1; 52), de manière à ce que la feuille de verre (1; 52) soit pressée progressivement contre la surface de la forme de bombage (3) sans mouvement relatif de glissement.

2. Procédé selon la revendication 1, caractérisé en ce que la feuille de verre (1) est amenée en position verticale entre la forme mâle pleine d'une seule pièce (2) et la forme femelle (3) en plusieurs éléments articulés (4, 5, 6) les uns aux autres d'une presse de bombage et en ce que la feuille de verre (1) est appliquée progressivement contre la forme mâle (2) pleine par les éléments articulés (4, 5, 6) roulant sur la feuille de verre.

3. Procédé selon la revendication 1, caractérisé en ce que la feuille de verre (52) en position horizontale est saisie par une plaque aspirante disposée au-dessus de la feuille de verre (52), comportant plusieurs plaques aspirantes articulées (55, 56, 57) les unes aux autres et en ce que la feuille de verre est cintrée par rotation des plaques articulées (56, 57) alors que leurs axes d'articulation sont dans une position déterminée et que l'on maintient son contact par aspiration.

4. Dispositif pour la mise en oeuvre du procédé selon une des revendications 1 et 2 comportant une presse de bombage présentant une forme mâle pleine (2) en un élément et une matrice (3) en plusieurs éléments rigides (4, 5, 6), mobiles en rotation constituant comme surface de bombage un cadre, caractérisé en ce que les axes d'articulation (7, 8; 37, 38) des éléments articulés (5, 6) sont guidés le long d'une courbe (K) déterminée en fonction de la géométrie de la forme souhaitée du vitrage.

5. Dispositif selon la revendication 4, caractérisé en ce que la guidage des axes d'articulation (37, 38) le long de la courbe (K), est assuré par des guides coulissants dans des fentes (13, 14) percées dans des plaques de coulisse (41, 42).

6. Dispositif selon la revendication 5, caractérisé en ce que dans le cas d'une matrice (3) en trois éléments, dont un élément central rigide (4), les plaques de coulisse (41, 42) sont disposées sur l'élément central et les axes d'articulation (37, 38) sur les éléments latéraux mobiles (5, 6).

7. Dispositif selon la revendication 6, caractérisé en ce que les plaques de coulisse (41, 42) sont disposées sur l'élément central (4) de façon réglable et/ou démontable.

8. Dispositif selon une quelconque des revendications 4 à 7, caractérisé en ce que sur les axes d'articulation (37, 38) sont articulés des ressorts (46) ou des vérins hydrauliques ou pneumatiques, qui au cours de la rotation des éléments latéraux (5, 6) exercent une force de rappel et qui ramènent les axes d'articulation (37, 38) en position de départ à la fin de l'opération de bombage.

9. Dispositif selon une quelconque des revendications 4 à 9, caractérisé en ce queles éléments latéraux mobiles (5, 6) présentent un cadre extérieur (35, 43; 36, 44) et un cadre de bombage (32, 33) disposé à l'intérieur de ce cadre extérieur (35, 43; 36, 44) et en ce que la forme mâle (2) est dotée dans ses régions coopérant avec les éléments latéraux articulé (5, 6) de barres conductrices (21, 22) coopérant avec parties (43, 44) des cadres extérieurs et sur lesquel les roulent ces parties (43, 44) des cadres extérieurs des éléments latéraux (5, 6).

10. Dispositif selon la revendication 9, caractérisé en ce que les barres conductrices (21, 22) définissent entre la surface de formage de la forme mâle (2) et les cadres de bombage (32, 33) un espace correspondant à l'épaisseur de la feuille de verre à bomber et sont fixées d une manière réglable à la forme mâle.

11. Dispositif selon l'une des revendications 4 à 10, caractérisé en ce que des mécanismes à manivelle sont prévus pour le guidage des axes d'articulation le long d'une courbe déterminée.

12. Dispositif comportant une plaque aspirante déformable (55, 56, 57) soulevant la feuille de verre (52) chauffée amenée en position horizontale par un convoyeur (53), la plaque aspirante (55, 56, 57) étant déformée après avoir saisi la feuille de verre (52) qui est ainsi cintrée à la forme souhaitée et étant composée d'une plaque aspirante centrale (55) rigide, ayant une surface de contact essentiellement plane et d'au moins une plaque aspirante latérale (56, 57) en soit rigide, articulée et ayant une surface de contact partiellement bombée, caractérisé en ce que les axes d'articulation des plaques latérales (56, 57) sont guidées le long d'une courbe déterminée en fonction de la géométrie de la forme souhaitée du vitrage.

13. Dispositif selon la revendication 12, caractérisé en ce que pour le guidage des plaques articulées (56, 57) au moyen d'un mécanisme à manivelle, les plaques (56, 57) sont articulées sur le cadre support (59) de la plaque aspirante par deux manivelles (60, 61; 62, 63) dont les longueurs et l'emplacement de leurs points d'articulation (70, 71; 72, 73) sur les plaques articulées (56) sur le cadre-support (59) sont choisis de manière à ce que la partie bombée de la surface de contact des plaques aspirantes articulées (56, 57) roule sur la surface de la feuille de verre (52) sans mouvement relatif de glissement par rapport à celle-ci.

14. Dispositif selon une des revendications 4 à 13, caractérisé en ce les courbes prévues pour le guidage des éléments articules (5, 6; 56, 57) au moyen de guides de coulisse (13, 14) ou de mécanisme à manivelle sont établies de manière telle que de faibles forces de traction s'exercent sur la feuille de verre (1; 52) en direction de la surface de la feuille.

**Patentansprüche**

1. Verfahren zum Biegen einer Glasscheibe (1; 52), beispielsweise einer Autoglasscheibe, mit Hilfe einer mehrteiligen Biegeform (3), mit mehreren gelenkig miteinander verbundenen Elementen (4, 5, 6; 55, 56, 57), wobei die auf Biegetemperatur erwärmte Glasscheibe (1; 52) von der Biegeform (3) erfaßt und durch Verschwenken wenigstens eines der gelenkig miteinander verbundenen Elemente (5, 6; 56, 57) um die Gelenkachse (7, 8; 37, 38) in die gewünschte Form gebogen wird, dadurch gekennzeichnet, daß das verschwenkbare Element (5, 6; 56, 57) unter Verlagerung seiner Gelenkachse (7, 8; 37, 38) entlang einer in Abhängigkeit von der für die Glasscheibe (1; 52) gewünschten Form ermittelten Kurvenbahn fortschreitend auf der Glasscheibe (1; 52) abgewälzt wird derart, daß die Glasscheibe (1; 52) ohne gleitende Relativbewegung fortschreitend gegen die Oberfläche der Biegeform (3) angepreßt wird.

2. Verfahren nach Anspruch 1, dadurch gekennzeichnet, daß die Glasscheibe (1) in vertikaler Lage zwischen die einteilige vollflächige Patrize (2) und die mehrteilige gelenkig miteinander verbundenen Elemente (4, 5, 6) aufweisende Matrize (3) einer Biegepresse verbracht wird, und daß die Glasscheibe (1) durch die auf der Glasscheibe abrollenden verschwenkbaren Elemente (4, 5, 6) fortschreitend gegen die vollflächige Patrize (2) angelegt wird.

3. Verfahren nach Anspruch 1, dadurch gekennzeichnet, daß die Glasscheibe (52) in horizontaler Lage von einer oberhalb der Glasscheibe (52) angeordneten, mehrere gelenkig miteinander verbundene Saugplatten (55, 56, 57) umfassenden Saugplatte ergriffen wird, und daß die Glasscheibe unter Beibehaltung ihres Saugkontakts durch Verschwenken der schwenkbaren Platten (56, 57) gebogen wird, während ihre Schwenkachsen eine vorbestimmte Lage einnehmen.

4. Vorrichtung zur Durchführung des Verfahrens nach einem der Ansprüche 1 und 2, mit einer eine einteilige vollflächige Patrize (2) und eine mehrteilige Matrize (3) aus durch Gelenke miteinander verbundenen, verschwenkbaren und jeweils in sich starren Elementen (4, 5, 6) mit rahmenförmigen Biegeflächen aufweisenden Biegepresse, dadurch gekennzeichnet, daß die Gelenkachsen (7, 8; 37, 38) der verschwenkbaren Elemente (5, 6) entlang einer in Abhängigkeit von der Geometrie der gewünschten Scheibenform ermittelten Kurvenbahn (K) geführt sind.

5. Vorrichtung nach Anspruch 4, dadurch gekennzeichnet, daß die Führung der Gelenkachsen (37, 38) entlang der Kurvenbahn (K) durch Kulissenführungen in schlitzförmigen Ausnehmungen (13, 14) von Kulissenplatten (41, 42) bewirkt wird.

6. Vorrichtung nach Anspruch 5, dadurch gekennzeichnet, daß bei einer dreiteiligen Matrize (3) mit einem starr angeordneten mittleren Element (4) die Kulissenplatten (41, 42) an dem mittleren Element (4), und die Gelenkachsen (37, 38) an den seitlichen beweglichen Elementen (5, 6) angeordnet sind.

7. Vorrichtung nach Anspruch 6, dadurch gekennzeichnet, daß die Kulissenplatten (41, 42) an dem mittleren Element (4) verstellbar und/oder auswechselbar angeordnet sind.

8. Vorrichtung nach einem der Ansprüche 4 bis 7, dadurch gekennzeichnet, daß an den Gelenkachsen (37, 38) Zugfedern (46) oder hydraulische oder pneumatische Zylinder angelenkt sind, die beim Verschwenken der seitlichen Elemente (5, 6) eine Gegenkraft ausüben und die nach Durchführung des Biegevorgangs die Gelenkachsen (37, 38) in ihre Ausgangsstellung zurückziehen.

9. Vorrichtung nach einem oder mehreren der Ansprüche 4 bis 8, dadurch gekennzeichnet, daß die seitlichen beweglichen Elemente (5, 6) einen äußeren Rahmen (35, 43; 36, 44) und einen innerhalb dieses äußeren Rahmens (35, 43; 36, 44) angeordneten Biegerahmen (32, 33) aufweisen, und daß die Patrize (2) in den mit den verschwenkbaren seitlichen Elementen (5, 6) zusammenwirkenden Bereichen mit mit Teilen (43, 44) der äußeren Rahmen zusammenwirkenden Führungsleisten (21, 22) versehen sind, auf denen die Teile (43, 44) der äußeren Rahmen der seitlichen Elemente (5, 6) abrollen.

10. Vorrichtung nach Anspruch 9, dadurch gekennzeichnet, daß die Führungsleisten (21, 22) einen der Dicke der zu biegenden Glasscheibe entsprechenden Abstand zwischen der Formfläche der Patrize (2) und den Biegerahmen (32, 33) definieren und an der Patrize verstellbar befestigt sind.

11. Vorrichtung nach einem der Ansprüche 4 bis 10, dadurch gekennzeichnet, daß zur Führung der Gelenkachsen entlang einer vorgegebenen Kurvenbahn Kurbelgetriebe vorgesehen sind.

12. Vorrichtung mit einer die erhitzte Glasscheibe (52) in horizontaler Lage von einem Förderer (53) aufnehmenden verformbaren Saugplatte (55, 56, 57), die nach dem Aufnehmen der Glasscheibe (52) verformt wird, wodurch diese in die gewünschte Form gebogen wird, wobei die Saugplatte aus einer mittleren starren Saugplatte (55) mit im wesentlichen ebener Kontaktfläche, und wenigstens einer verschwenkbaren, in sich starren seitlichen Saugplatte (56, 57) mit einer teilweise gewölbten Kontaktfläche besteht, dadurch gekennzeichnet, daß die Gelenkachsen der seitlichen Platten (56, 57) entlang einer in Abhängigkeit von der Geometrie der gewünschten Scheibenform ermittelten Kurvenbahn geführt werden.

13. Vorrichtung nach Anspruch 12, dadurch gekennnzeichnet, daß zur Führung der verschwenkbaren Platten (56, 57) mit Hilfe eines Kurbeltriebs die Platten (56, 57) durch zwei Kurbeln (60, 61; 62, 63) an dem Tragrahmen (59) der Saugplatte angelenkt sind, deren Lange und die Lage ihrer Anlenkpunkte (70, 71, 72, 73) an den verschwenkbaren Platten (56) und an dem Tragrahmen (59) so gewählt sind, daß der gewölbte Teil der Kontaktfläche der verschwenkbaren Platten (56, 57) auf der Oberfläche der Glasscheibe (52) ohne gleitende Relativbewegung in Bezug auf diese abrollt.

14. Vorrichtung nach einem der Ansprüche 4 bis 13, dadurch gekennzeichnet, daß die durch die Kulissenführungen (13, 14) oder den Kurbeltrieb für die Führung der verschwenkbaren Elemente (5, 6; 56, 57) vorgegebenen Kurvenbahnen so gestaltet sind, daß auf die Glasscheibe (1; 52) geringfügige Zugkräfte in Richtung der Scheibenfläche ausgeübt werden.

## Claims

1. A method of curving a sheet of glass (1; 52), for example an automobile window pane, by means of a curving mould (3), consisting of several elements (4, 5, 6; 55, 56, 57) articulated to one another, in which the sheet (1; 52) heated to its curving temperature is gripped by the curving mould (3) and, by the rotation of at least one of the articulated elements (5, 6; 56, 57) about its articulation axis (7, 8; 37, 38), is bent to the desired shape, characterized in that the articulated element (5, 6; 56, 57) is rolled progressively onto the glass sheet (1; 52), the articulation axis (7, 8; 37, 38) being positioned along a curve determined as a function of the shape desired for the glass sheet (1; 52), in such a manner that the glass sheet (1; 52) is pressed progressively against the surface of the curving mould (3) without relative sliding movement.

2. A method according to Claim 1, characterized in that the glass sheet (1) in brought into a vertical position between the single-piece, solid male mould (2) and the female mould (3) consisting of several elements (4, 5, 6) articulated to one another of a curving press, and in that the glass sheet (1) is applied progressively against the solid male mould (2) by the articulated elements (4, 5, 6) rolling on the glass sheet.

3. A method according to Claim 1, characterized in that the glass sheet (52) in a horizontal position is gripped by a suction plate disposed above the glass sheet (52), comprising several auction plates (55, 56, 57) articulated to one another, and in that the glass sheet is bent by rotation of the articulated plates (56, 57) while their articulation axes are in a specific position and in that its contact is maintained by suction.

4. Apparatus for carrying out the method according to on of Claims 1 and 2, comprising a curving press possessing a solid male mould (2) of one element and a female mould (3) of several rigid elements (4, 5, 6), movable in rotation and constituting a frame as curving surface, characterized in that the articulation axes (7, 8; 37, 38) of the articulated elements (5, 6) are guided along a curve (K) determined as a faction of the geometry of the desired shape of the pane.

5. Apparatus according to Claim 4, characterized in that the guidance of the articulation axes (37, 38) along the curve (K) is assured by guides sliding in slots (13, 14) formed in slide plates (41, 42).

6. Apparatus according to Claim 5, characterized in that, in the case of a female mould (3) of three elements including a rigid central element (4), the glide plates (41, 42) are disposed on the central element and the articulation axes (37, 38) are disposed on the movable lateral elements (5, 6).

7. Apparatus according to Claim 6, characterized in that the slide plates (41, 42) are disposed on the central element (4) in an adjustable and/or removable manner.

8. Apparatus according to any one of Claims 4 to 7, characterized in that onto the articulation axes (37, 38) there are articulated springs (46) or hydraulic or pneumatic jacks, which during the rotation of the lateral elements (5, 6) exert a restoring force and which bring the articulation axes (37, 38) back into their starting position at the end of the curving operation.

9. Apparatus according to any one of Claims 4 to 8, characterized in that the movable lateral elements (5, 6) possess an external frame (35, 43; 36, 44) and a curving frame (32, 33) disposed inside this external frame (35, 43; 36, 44) and in that the male mould (2) is equipped, in its regions cooperating with the lateral articulated elements (5, 6), with guide bars (21, 22) cooperating with parts (43, 44) of the external frames and on which these parts (43, 44) of the external frames of the lateral elements (5, 6) roll.

10. Apparatus according to Claim 9, characterized in that the guide bars (21, 22) define, between the shaping surface of the male mould (2) and the curving frames (32, 33), a space corresponding to the thickness of the glass sheet to be curved and are fixed in an adjustable manner to the male mound.

11. Apparatus according to one of Claims 4 to 10, characterized in that crank mechanisms are provided for the guidance of the articulation axes along a determined curve.

12. Apparatus comprising a deformable suction plate (55, 56, 57) raising the heated glass sheet (52), brought in a horizontal position by a conveyor (53), the suction plate (55, 56, 57) being deformed after it has seized the glass sheet (52), which is thus bent to the desired form, and being composed of a rigid central suction plate (55) having a substantially plane contact surface and of at least one lateral auction plate (56, 57), itself rigid, articulated and having a partly curved contact surface, characterized in that the articulation axes of the lateral plates (56, 57) are guided along a curve determined as a function of the geometry of the shape desired for the pane.

13. Apparatus according to Claim 12, characterized in that, for the guidance of the articulated plates (56, 57) by means of a crank mechanism, the plates (56, 57) are articulated onto the supporting frame (59) of the suction plate by two cranks (60, 61; 62, 63), of which the lengths and the positions of their articulation points (70, 71; 72, 73) on the articulated plates (56) and on the support frame (59) are chosen in such a manner that the curved part of the contact surface of the articulated suction plates (56, 57) rolls on the surface of the glass sheet (52) without relative sliding movement with respect to the latter.

14. Apparatus according to one of Claims 4 to 13, characterized in that the curves provided for the guidance of the articulated elements (5, 6; 56, 57) by means of slide guides (13, 14) or crank mechanisms are established in such a manner that small tensile forces are exerted upon the glass sheet (1; 52) towards the surface of the sheet.

**Fig. 1**

Fig. 2

EP 0 211 755 B1

*Fig. 3*

# Fig. 4

Fig. 5

**_Fig. 6_**